# EUROPÄISCHE PATENTSCHRIFT

(11) **EP 0 431 609 B1**
(45) Veröffentlichungstag und Bekanntmachung des Hinweises auf die Patenterteilung: **09.11.1994**
(21) Anmeldenummer: 90123398.1
(22) Anmeldetag: 06.12.1990
(51) Int. Cl.: C08G 77/392

(54) **Sulfosuccinatgruppen enthaltende Organopolysiloxane**
Sulphosuccinate-group containing organopolysiloxanes
Organopolysiloxanes contenant des groupes sulfosuccinates

(30) Priorität: 07.12.1989 DE 3940536
(43) Veröffentlichungstag der Anmeldung: 12.06.1991
(73) Patentinhaber: WACKER-CHEMIE GMBH, D-81737 München (DE)
(72) Erfinder: Herzig, Christian, Dr., W-8221 Taching (DE)

(56) Entgegenhaltungen:
- EP-A- 0 283 156
- DD-A- 239 596
- DD-A- 255 346
- DD-A- 282 014
- DD-A- 282 692

## Beschreibung

In DD-A 239 596 (ausgegeben am 1. Oktober 1986, G. Sonnek et al., VEB Chemiewerk Nünchritz) ist ein Verfahren zur Herstellung von Siloxanyl-buten-2-diol-1,4-Verbindungen beschrieben, bei dem 2-Butin-1,4-diol mit Si-gebundene Wasserstoffatome aufweisendem Organopolysiloxan in Gegenwart von Hexachloroplatinsäure umgesetzt wird, wobei bei der Umsetzung das Verhältnis Dreifachbindung im 2-Butin-1,4-diol zu SiH-Gruppen im Si-gebundene Wasserstoffatome aufweisendem Organopolysiloxan 1 : 1 bis 1 : 3 beträgt, also SiH-Gruppen aufweisendes Organopolysiloxan bevorzugt im Überschuß eingesetzt wird. Das überschüssige SiH-Gruppen aufweisende Organopolysiloxan läßt sich aber nach der Hydrosilylierungsreaktion nicht mehr vom Endprodukt abtrennen. Um eine Reaktion zwischen den reaktiven Hydroxylgruppen im 2-Butin-1,4-diol und den SiH-Gruppen im Organopolysiloxan zu vermeiden, werden gemäß den Beispielen der DD-A 239 596 die reaktiven Hydroxylgruppen im 2-Butin-1,4-diol vor der Hydrosilylierungsreaktion durch Trimethylsilylgruppen geschützt, die dann nach der Umsetzung wieder abgespalten werden müssen, d.h. das Verfahren besteht insgesamt aus drei Stufen. Im Beispiel 11 der DD-A 239 596, das einzige Beispiel, bei dem auf die Trimethylsilylschutzgruppen verzichtet wird, wird 2-Butin-1,4-diol direkt mit Heptamethyltrisiloxan, das nur ein Si-gebundenes Wasserstoffatom je Molekül aufweist, im stöchiometischen Verhältnis umgesetzt, wobei aber das Endprodukt, das 2-Heptamethyltrisiloxanyl-buten-2-diol-1,4, nur in geringer Reinheit und in mäßiger Ausbeute erhalten wird.

In DD-A 255 346 (ausgegeben 30. März 1988, G. Sonnek et al., Akademie der Wissenschaften der DDR) ist ein Verfahren zur Herstellung von Siloxanyl-alkendiyl-bis-carboxylaten beschrieben, bei dem Siloxanyl-buten-2-diol-1,4-Verbindungen mit gesättigten oder ungesättigten Anhydriden in Gegenwart eines Veresterungskatalysators umgesetzt werden. In den Beispielen wird jeweils nur 2-Heptamethyltrisiloxanyl-but-2-en-1,4-diol oder 2-Pentadecamethylheptasiloxanyl-but-2-en-1,4-diol, also ein Organopolysiloxan mit nur einer Si-gebundenen Dihydroxyalkenylgruppe je Molekül eingesetzt.

Aus EP-A 283 156 (offengelegt 21. September 1988, A.R.L. Colas et al., Dow Corning Limited) sind Sulfosuccinatgruppen enthaltende Organopolysiloxane bekannt, die zunächst durch Umsetzung von Maleinsäureanhydrid mit Organopolysiloxan mit Si-gebundenen Hydroxyalkylgruppen und anschließend durch Umsetzung der so erhaltenen Maleinatgruppen in dem Organopolysiloxan mit Natriumbisulfit in Gegenwart von Wasser und einer basischen Substanz hergestellt werden. Die als Ausgangsstoffe eingesetzten Organopolysiloxane mit Si-gebundenen Hydroxyalkylgruppen sind schwer zugänglich, da gemäß W. Noll, Chemistry and Technology of Silicones, Academic Press, Inc., 1968, Seite 163 der formal einfachste Weg zu ihrer Herstellung, die Addition der SiH-Bindung in SiH-Gruppen aufweisenden Organopolysiloxanen an ungesättigte Alkohole wegen der Reaktivität der SiH-Bindung auch gegenüber der C-OH-Gruppe nicht gangbar ist.

Es bestand die Aufgabe, Sulfosuccinatgruppen enthaltende Organopolysiloxane bereitzustellen, die bessere oberflächenaktive Eigenschaften als bisher aufweisen und die in einem einfachen Verfahren und in guten Ausbeuten hergestellt werden können. Die Aufgabe wird durch die Erfindung gelöst.

Gegenstand der Erfindung sind Sulfosuccinatgruppen enthaltende Organopolysiloxane aus durchschnittlichen Einheiten der allgemeinen Formel 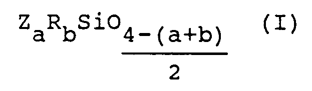
wobei R gleiche oder verschiedene, einwertige, gegebenenfalls halogenierte Kohlenwasserstoffreste mit 1 bis 18 Kohlenstoffatom(en) je Rest bedeutet,
Z ein Rest der Formel 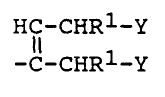
ist, wobei Y ein Rest der Formel 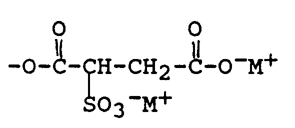
R¹ ein Wasserstoffatom oder einen Alkylrest mit 1 bis 4 Kohlenstoffatom(en) je Rest und
M⁺ ein Wasserstoffion und/oder ein Alkalimetallion bzw. ein Ammoniumion bedeutet,
a 0 oder 1, durchschnittlich 0,03 bis 1,0 und
b 0, 1, 2 oder 3, durchschnittlich 1,0 bis 2,5 bedeutet und die Summe a+b nicht größer als 3 ist,
mit der Maßgabe, daß mindestens zwei Reste Z je Molekül enthalten sind.

Bevorzugt als Sulfosuccinatgruppen enthaltende Organopolysiloxane sind solche der allgemeinen Formel

Z_{c}R_{3-c}SiO(SiR₂O)ₙ(SiRZO)ₘSiR_{3-c}Z_{c} (II)

wobei Z und R die oben dafür angegebene Bedeutung haben, c 0 oder 1,
n 0 oder eine ganze Zahl von 1 bis 500 und
m 0 oder eine ganze Zahl von 1 bis 50 ist,
mit der Maßgabe, daß mindestens zwei Reste Z je Molekül enthalten sind.

Die erfindungsgemäßen Sulfosuccinatgruppen enthaltenden Organopolysiloxane besitzen vorzugsweise ein durchschnittliches Molekulargewicht von 400 bis 50 000 g/Mol, bevorzugt 400 bis 5 000 g/Mol.

Gegenstand der Erfindung ist weiterhin ein Verfahren zur Herstellung von Sulfosuccinatgruppen enthaltenden Organopolysiloxanen, dadurch gekennzeichnet, daß zunächst
in einer 1. Stufe ein
Dihydroxyalkin (1) der allgemeinen Formel HO-CHR¹-C≡C-CHR'-OH, wobei R¹ die oben dafür angegebene Bedeutung hat, mit Organopolysiloxan (2) mit mindestens einem Si-gebundenen Wasserstoffatom je Molekül in Mengen von 1,03 bis 2,0 Mol Dihydroxyalkin (1) je Grammatom Si-gebundener Wasserstoff im Organopolysiloxan (2) in Gegenwart von die Anlagerung von Si-gebundenen Wasserstoff an aliphatische Mehrfachbindung förderndem Katalysator (3) umgesetzt wird,
in einer 2. Stufe
die Dihydroxyalkenylgruppen des in der 1. Stufe erhaltenen Organopolysiloxans mit Maleinsäureanhydrid umgesetzt werden und dann
in einer 3. Stufe
die Maleinatgruppen des in der 2. Stufe erhaltenen Organopolysiloxans mit Alkalihydrogensulfit oder Ammoniumhydrogensulfit in Gegenwart von Wasser und einer basischen Verbindung umgesetzt werden.

Gegenstand der Erfindung ist weiterhin ein Verfahren zur Herstellung von Dihydroxyalkenylgruppen enthaltenden Organopolysiloxanen durch Umsetzung von Dihydroxyalkin (1) mit Organopolysiloxan (2) mit mindestens einem Si-gebundenen Wasserstoffatom je Molekül in Mengen von 1,03 bis 2,0 Mol Dihydroxyalkin (1) je Grammatom Si-gebundener Wasserstoff im Organopolysiloxan (2) in Gegenwart von die Anlagerung von Si-gebundenen Wasserstoff an aliphatische Mehrfachbindung förderndem Katalysator (3).

Gemäß der oben genannten DD-A 239 596 war nicht zu erwarten, daß durch die Verwendung eines geringen Überschusses an Dihydroxyalkin (1) keine Schutzgruppen mehr für die reaktiven Hydroxylgruppen des Dihydroxyalkins eingeführt werden müssen und Dihydroxyalkenylgruppen enthaltende Organopolysiloxane, auch wenn sie mehr als nur eine Si-gebundene Dihydroxyalkenylgruppe je Molekül enthalten, in hoher Reinheit und in guten Ausbeuten gewonnen werden.

Beispiele für Reste R sind Alkylreste, wie der Methyl-, Ethyl-, n- Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest. Bevorzugt ist der Methylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m- und p-Chlorphenylrest.

Beispiele für Alkylreste R¹ sind der Methyl-, Ethyl-, n-Propyl-, iso-Propyl-, 1-n-Butyl-, 2-n-Butyl-, iso-Butyl- und tert.-Butylrest. Bevorzugt ist der Rest R¹ ein Wasserstoffatom.

Bevorzugt sind in den erfindungsgemäßen Sulfosuccinatgruppen enthaltenden Organopolysiloxanen die Ionen M⁺ Natriumionen und Wasserstoffionen.

Bevorzugt als Rest Z ist der Rest der Formel 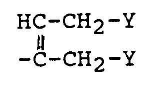
ist, wobei Y ein Rest der Formel 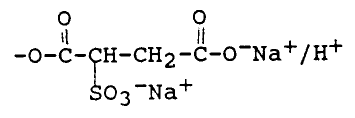
ist.

Bevorzugt wird Dihydroxyalkin (1) mit organopolysiloxan (2) mit mindestens einem Si-gebundenen Wasserstoffatom je Molekül in Mengen von 1,03 bis 1,10 Mol je Grammatom Si-gebundenen Wasserstoff im Organopolysiloxan (2) umgesetzt.

Vorzugsweise wird bei dem erfindungsgemäßen Verfahren als Dihydroxyalkin (1), 2-Butin-1,4-diol eingesetzt.

Vorzugsweise wird bei dem erfindungsgemäßen Verfahren als Organopolysiloxan (2) mit mindestens einem Si-gebundenen Wasserstoffatom je Molekül solches der Formel 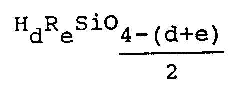
wobei R die oben dafür angegebene Bedeutung hat,
d 0 oder 1, durchschnittlich 0,03 bis 1,0 und
e 0, 1, 2 oder 3, durchschnittlich 1,0 bis 2,5 ist und die Summe d+e nicht größer als 3 ist,
verwendet.

Als Organopolysiloxan (2) wird bei dem erfindungsgemäßen Verfahren bevorzugt solches der allgemeinen Formel

H_{f}R_{3-f}SiO(SiR₂O)ₒ(SiRHO)ₚSiR_{3-f}H_{f} ,

wobei R die oben dafür angegebene Bedeutung hat,
f 0 oder 1,
o 0 oder eine ganze Zahl von 1 bis 500 und
p 0 oder eine ganze Zahl von 1 bis 50 ist,
mit der Maßgabe, daß mindestens zwei Wasserstoffatome je Molekül enthalten sind,
verwendet.

Die Viskosität der Organopolysiloxane (2) mit mindestens einem Si-gebundenen Wasserstoffatom je Molekül beträgt vorzugsweise 1 bis 10 000 mm²·s⁻¹ bei 25°C, bevorzugt 1 bis 1 000 mm²·s⁻¹ bei 25°C.

Bevorzugte Beispiele für Organopolysiloxane (2) sind Mischpolymerisate aus Dimethylhydrogensiloxan- und Dimethylsiloxaneinheiten, Mischpolymerisate aus Dimethylhydrogensiloxan-, Dimethylsiloxan- und Methylhydrogensiloxaneinheiten, Mischpolymerisate aus Trimethylsiloxan-und Methylhydrogensiloxaneinheiten und Mischpolymerisate aus Trimethylsiloxan-, Dimethylsiloxan- und Methylhydrogensiloxaneinheiten.

Verfahren zur Herstellung von Organopolysiloxanen (2) mit mindestens einem Si-gebundenen Wasserstoffatom je Molekül, auch von solchen der bevorzugten Art sind bekannt.

Als die Anlagerung von Si-gebundenem Wasserstoff an aliphatische Mehrfachbindung fördernde Katalysatoren (3) können auch bei dem erfindungsgemäßen Verfahren die gleichen Katalysatoren eingesetzt werden, die auch bisher zur Förderung der Anlagerung von Si-gebundenen Wasserstoff an aliphatische Mehrfachbindung eingesetzt werden konnten. Bei den Katalysatoren (3) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆*6H₂O, Na₂PtCl₄*4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆*6H₂O und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin gemäß US-A 4 292 434, wie das Umsetzungsprodukt aus in 1-Octen gelöstem Platintetrachlorid mit sec.-Butylamin, oder Ammonium-Platinkomplexe gemäß Ep-B 110 370.

Der Katalysator (3) wird vorzugsweise in Mengen von 1 bis 1 000 Gew.-ppm (Gewichtsteilen je Million Gewichtsteilen), bevorzugt in Mengen von 5 bis 50 Gew.-ppm, jeweils berechnet als elementares Platin und bezogen auf das Gesamtgewicht von Dihydroxyalkin (1) und Organopolysiloxan (2) mit mindestens einem Si-gebundenen Wasserstoffatom je Molekül eingesetzt.

Die Additionsreaktion (oder Hydrosilylierungsreaktion) in der 1. Stufe des erfindungsgemäßen Verfahrens wird vorzugsweise beim Druck der umgebenden Atmosphäre, also etwa bei 1020 hPa (abs.), durchgeführt, sie kann aber auch bei höheren oder niedrigeren Drücken durchgeführt werden. Ferner wird die Additionsreaktion vorzugsweise bei einer Temperatur von 80°C bis 140°C, bevorzugt 110°C bis 140°C, durchgeführt.

In der 1. Stufe des erfindungsgemäßen Verfahrens werden vorzugsweise inerte organische Lösungsmittel in Mengen von 0 bis 70 Gew.%, bezogen auf das Gesamtgewicht von Dihydroxyalkin (1) und Organopolysiloxan (2) mit mindestens einem Si-gebundenen Wasserstoffatom je Molekül, mitverwendet. Beispiele für inerte organische Lösungsmittel sind Toluol, Xylol, Ethylbenzol, Dioxan, 1,2-Dimethoxyethan, Butylacetat und Ethylbutyrat.

Bei der in der 1. Stufe des erfindungsgemäßen Verfahrens durchgeführten Hydrosilylierung wird ein Dihydroxyalkenylgruppen enthaltendes Organopolysiloxan nach folgendem Reaktionsschema erhalten: 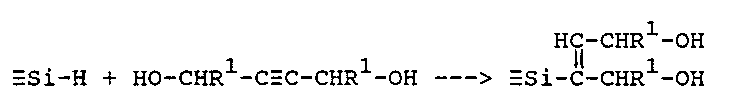
Vorzugsweise wird als Dihydroxyalkenylgruppen enthaltendes Organopolysiloxan solches aus durchschnittlichen Einheiten der Formel 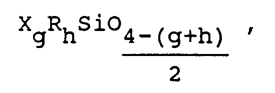
wobei R die oben dafür angegebene Bedeutung hat und X ein Rest der Formel 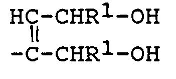
ist, wobei R¹ die oben dafür angegebene Bedeutung hat,
g 0 oder 1, durchschnittlich 0,03 bis 1,0 und
h 0, 1, 2 oder 3, durchschnittlich 1,0 bis 2,5 ist
und die Summe g+h nicht größer als 3 ist,
mit der Maßgabe, daß mindestens ein Rest X je Molekül enthalten ist,
erhalten.

Bevorzugt wird als Dihydroxyalkenylgruppen enthaltendes Organopolysiloxan solches der allgemeinen Formel

XₓR₃₋ₓSiO(SiR₂O)_{y}(SiRXO)_{z}SiR₃₋ₓXₓ ,

wobei R und X die oben dafür angegebene Bedeutung haben,
x 0 oder 1,
y 0 oder eine ganze Zahl von 1 bis 500 und
z 0 oder eine ganze Zahl von 1 bis 50 ist,
mit der Maßgabe, daß mindestens zwei Reste X je Molekül enthalten sind,
erhalten.

Die Dihydroxyalkenylgruppen enthaltenden Organopolysiloxane besitzen vorzugsweise ein durchschnittliches Molekulargewicht von 200 bis 50 000 g/Mol, bevorzugt 200 bis 5 000 g/Mol.

Von dem in der 1. Stufe des erfindungsgemäßen Verfahrens erhaltenen, Dihydroxyalkenylgruppen enthaltenden Organopolysiloxan wird überschüssiges Dihydroxyalkin (1) sowie gegebenenfalls mitverwendetes inertes organisches Lösungsmittel destillativ entfernt.

Entsprechend folgendem Reaktionsschema werden in der 2. Stufe des erfindungsgemäßen Verfahrens die Dihydroxyalkenylgruppen X des in der 1. Stufe erhaltenen Organopolysiloxans mit Maleinsäureanhydrid verestert und es wird ein Maleinatgruppen enthaltendes Organopolysiloxan gewonnen:

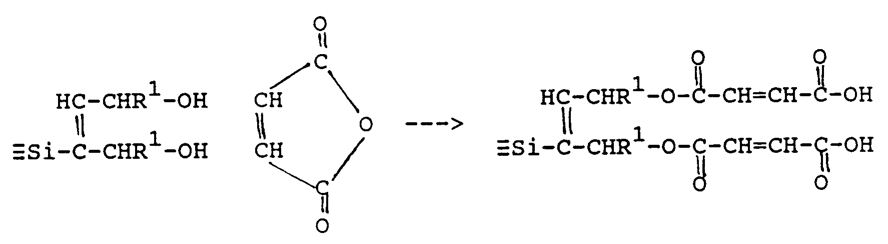

In der 2. Stufe des erfindungsgemäßen Verfahrens wird Maleinsäureanhydrid mit den Dihydroxyalkenylgruppen X des in der 1. Stufe erhaltenen Organopolysiloxans vorzugsweise in Mengen von 2,0 bis 3,0 Mol, bevorzugt 2,1 bis 2,5 Mol, Maleinsäureanhydrid je Mol Dihydroxyalkenylgruppe X im Organopolysiloxan umgesetzt.

Vorzugsweise wird in der 2. Stufe des erfindungsgemäßen Verfahrens inertes organisches Lösungsmittel, in Mengen von 0 bis 70 Gew.-%, bezogen auf das Gesamtgewicht an eingesetztem, Dihydroxyalkenylgruppen enthaltendem Organopolysiloxan, mitverwendet. Beispiele für inerte organische Lösungsmittel sind Toluol, Xylol, Ethylbenzol, Dioxan, 1,2-Dimethoxyethan, Butylacetat und Ethylbutyrat.

In der 2. Stufe des erfindungsgemäßen Verfahrens kann gegebenenfalls ein Veresterungskatalysator, wie Titanbutylat, Magnesiumacetat oder Calciumoxid mitverwendet werden.

Die Veresterung in der 2. Stufe des erfindungsgemäßen Verfahrens wird vorzugsweise bei 60°C bis 120°C, bevorzugt 80°C bis 110°C, und vorzugsweise beim Druck der umgebenden Atmosphäre, also etwa bei 1020 hPa (abs.), durchgeführt. Falls erwünscht können aber auch höhere und niedrigere Drücke angewendet werden.

Vorzugsweise wird in der 2. Stufe des erfindungsgemäßen Verfahrens als Maleinatgruppen enthaltendes Organopolysiloxan solches aus durchschnittlichen Einheiten der Formel 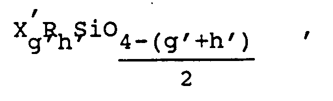
wobei R die oben dafür angegebene Bedeutung hat und X' ein Rest der Formel 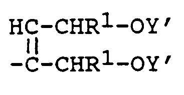
ist, wobei R¹ die oben dafür angegebene Bedeutung hat und Y' ein Rest der Formel 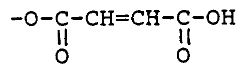
ist,
g' 0 oder 1, durchschnittlich 0,03 bis 1,0 und
h' 0, 1, 2 oder 3, durchschnittlich 1,0 bis 2,5 ist
und die Summe g'+h' nicht größer als 3 ist,
mit der Maßgabe, daß mindestens ein Rest X' je Molekül enthalten ist,
erhalten.

Bevorzugt wird in der 2. Stufe des erfindungsgemäßen Verfahrens als Maleinatgruppen enthaltendes Organopolysiloxan solches der allgemeinen Formel

X'_{x'}R_{3-x'}SiO(SiR₂O)_{y'}(SiRX'O)_{z'}SiR_{3-x'X'x'} ,

wobei R und X' die oben dafür angegebene Bedeutung hat,
x' 0 oder 1,
y' 0 oder eine ganze Zahl von 1 bis 500 und
z' 0 oder eine ganze Zahl von 1 bis 50 ist,
mit der Maßgabe, daß mindestens zwei Reste X' je Molekül enthalten sind,
erhalten.

In der 3. Stufe des erfindungsgemäßen Verfahrens werden die Maleinatgruppen Y' des in der 2. Stufe erhaltenen Organopolysiloxans vorzugsweise mit Natriumhydrogensulfit umgesetzt. Alkalihydrogensulfit kann dabei direkt zugegeben werden oder in Form einer Vorstufe, die sich unter den Reaktionsbedingungen in situ in Alkalihydrogensulfit umwandelt, z. B. Na₂S₂O₅, das sich in Gegenwart von Wasser in NaHSO₃ umwandelt.

Alkalihydrogensulfit oder Ammoniumhydrogensulfit oder Vorstufen davon werden in der 3. Stufe des erfindungsgemäßen Verfahrens vorzugsweise in solchen Mengen eingesetzt, daß 0,8 bis 1,2 Mol, bevorzugt 0,9 bis 1,1 Mol Alkalihydrogensulfit oder Ammoniumhydrogensulfit je Mol Maleinatgruppe Y' in dem in der 2. Stufe erhaltenen Organopolysiloxan vorliegen.

Basische Verbindungen die in der 3. Stufe des erfindungsgemäßen Verfahrens eingesetzt werden, sind solche die mit der Carboxylgruppe der Maleinatgruppe Y' unter Salzbindung reagieren. Beispiele für basische Verbindungen sind Alkalihydroxide, wie Natriumhydroxid und Kaliumhydroxid, wobei Natriumhydroxid bevorzugt ist. Bevorzugt werden daher Wasser und basische Verbindung in Form einer wäßrigen NaOH-Lösung eingesetzt.

In der 3. Stufe des erfindungsgemäßen Verfahrens werden vorzugsweise kurzkettige Alkanole, wie Methanol, Ethanol, Propanol oder Isopropanol, wobei Methanol bevorzugt ist, in Mengen von vorzugsweise 20 bis 80 Gew.-%, bezogen auf das Gesamtgewicht von eingesetztem, Maleinatgruppen enthaltenem Organopolysiloxan, mitverwendet.

Die Sulfonierung in der 3. Stufe des erfindungsgemäßen Verfahrens wird vorzugsweise bei 60°C bis 100°C, bevorzugt 70°C bis 90°C, und vorzugsweise beim Druck der umgebenden Atmosphäre, also etwa bei 1020 hPa (abs.) durchgeführt. Falls erwünscht können aber auch höhere oder niedrigere Drücke verwendet werden.

Die 3. Stufe des erfindungsgemäßen Verfahrens wird bevorzugt so durchgeführt, daß das in der 2. Stufe erhaltene Organopolysiloxan, das Maleinatgruppen Y' enthält, mit kurzkettigem Alkanol, wie Methanol, gemischt wird, dann NaHSO₃ oder Na₂S₂O₅ zu der Mischung zugegeben wird und zu der Reaktionsmischung anschließend soviel einer wäßrigen NaOH-Lösung zugegeben wird, bis sie vorzugsweise einen pH-Wert im Bereich von 6 bis 8, bevorzugt von in etwa 7 aufweist.

Die verschiedenen Stufen des erfindungsgemäßen Verfahrens können in ein und demselben Reaktionsgefäß hintereinander oder in von einander getrennten Reaktionsgefäßen durchgeführt werden. Vorzugsweise wird es in ein und demselben Reaktionsgefäß hintereinander durchgeführt. Das erfindungsgemäße Verfahren kann absatzweise, halbkontinuierlich oder vollkontinuierlich durchgeführt werden.

Die erfindungsgemäßen Sulfosuccinatgruppen enthaltenden Organopolysiloxane besitzen sowohl hydrophobe als auch hydrophile Gruppen im selben Molekül und weisen daher ausgeprägte oberflächenaktive Eigenschaften auf. Sie lassen sich daher in wäßrigen Systemen als Emulgatoren oder Schaummittel verwenden.

### Beispiel 1:

Eine Mischung aus 181 g (2,1 Mol) 2-Butin-1,4-diol, 6 mg Platin, in Form einer Lösung aus Platintetrachlorid in 1-Octen, und 40 g Toluol wird unter Stickstoff-Atmosphäre auf 110°C erwärmt. Zu der erwärmten Mischung werden dann 612 g eines α,ω-Dihydrogendimethylpolysiloxans mit einer Viskosität von 4 mm²·s⁻¹ bei 25°C (entsprechend 2,0 Grammatom Si-gebundenem Wasserstoff) zugetropft, wobei die Temperatur der Mischung auf ca. 130°C ansteigt. Nach ca. 8 Stunden Reaktionszeit bei 130°C sind ca. 99 % der Si-gebundenen Wasserstoffatome des α,ω-Dihydrogendimethylpolysiloxans umgesetzt. Bei 140°C und 10⁻³ hPa (abs.) werden die flüchtigen Bestandteile, wie überschüssiges 2-Butin-1,4-diol und Toluol, destillativ entfernt. Es werden 720 g (92 % d. Th.) eines Diorganopolysiloxans mit einer Viskosität von 356 mm²·s⁻¹ bei 25°C erhalten. Gemäß dem ¹H-NMR-Spektrum und dem ²⁹Si-NMR-Spektrum ergibt sich für das Diorganopolysiloxan folgende Formel

HOCH₂CH=C(CH₂OH)SiMe₂O[SiMe₂O]ₐMe₂SiC(CH₂OH)=CHCH₂OH ,

wobei Me ein Methylrest und a durchschnittlich 6,6 ist. Folgende Daten werden aus dem ²⁹Si-NMR-Spektrum erhalten: 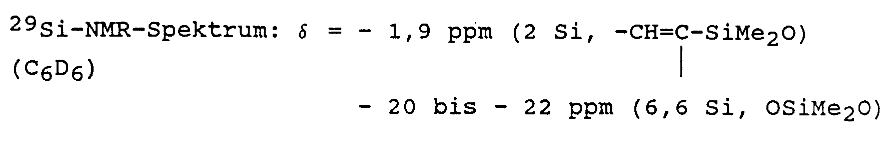
Bindungen folgender Art, -CH₂-O-Si≡, die von einer Reaktion der Hydroxylgruppen des 2-Butin-1,4-diols mit den Si-gebundenen Wasserstoffatomen im α,ω-Dihydrogendimethylpolysiloxan stammen würden, sind aus dem ²⁹Si-NMR-Spektrum nicht zu erkennen.

### Beispiel 2:

a) 165 g des Diorganopolysiloxans, dessen Herstellung in Beispiel 1 beschrieben ist, werden mit 98 g Maleinsäureanhydrid bei 70°C zur Reaktion gebracht. Nach 6 Stunden Reaktionszeit werden bei 100°C und 8 hPa (abs.) die flüchtigen Bestandteile, wie überschüssiges Maleinsäureanhydrid, destillativ entfernt. Gemäß dem IR-Spektrum wird ein Dimethylpolysiloxan erhalten mit je einem Si-gebundenen Rest der Formel 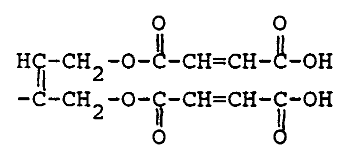 in den endständigen Einheiten. Aus dem IR-Spektrum ist bei 1733 cm⁻¹ die Bande für die Carbonylgruppe und bei 1635 cm⁻¹ die Bande für die Doppelbindung in den Maleinatgruppen, -OCO-CH=CH-COOH, zu entnehmen.
b) Das oben unter a) erhaltene, Maleinatgruppen aufweisende Dimethylpolysiloxan wird in 800 ml Methanol gelöst. Zu der Lösung werden 75,5 g Na₂S₂O₅ zugegeben. Der pH-Wert der Reaktionsmischung wird durch Zugabe von 1n NaOH auf einen Wert von ca. 7 eingestellt. Die Reaktionsmischung wird dann 7 Stunden bei 76°C erwärmt. Wasser und Methanol werden dann bei 100°C und 10 hPa destillativ entfernt. Es werden 300 g eines gelblichen Feststoffs, der eine gute Wasserlöslichkeit aufweist, erhalten. Eine 1 %ige Lösung des so gewonnenen Dimethylpolysiloxans mit je einer Si-gebundenen Gruppe der Formel 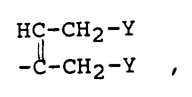 wobei Y ein Rest der Formel 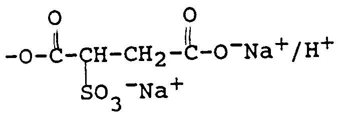 ist,
   in den endständigen Einheiten hat eine Oberflächenspannung von 31,7 dyn/cm.

### Beispiel 3:

Eine Mischung aus 181 g (2,1 Mol) 2-Butin-1,4-diol, 6 mg Platin, in Form einer Lösung aus Platintetrachlorid in 1-Octen, und 40 g Toluol wird unter Stickstoff-Atmosphäre auf 125°C erwärmt. Zu dieser Mischung werden innerhalb von 2 Stunden 364 g eines Mischpolymerisats aus Methylhydrogensiloxan-, Dimethylsiloxan- und Trimethylsiloxaneinheiten, das 0,55 Gew.-% Si-gebundenen Wasserstoff enthält und eine Viskosität von 11,2 mm²·s⁻¹ bei 25°C besitzt, zugetropft.

Nach ca. 8 Stunden Reaktionszeit bei 125°C sind 99 % der Si-gebundenen Wasserstoffatome des Mischpolymerisats umgesetzt. Von dem Rohprodukt werden bei 140°C und 10⁻³ hPa (abs.) die flüchtigen Bestandteile destillativ entfernt. Es werden 510 g (95 % d. Th.) eines Organopolysiloxans aus Trimethylsiloxaneinheiten, Dimethylsiloxaneinheiten und Siloxaneinheiten der Formel 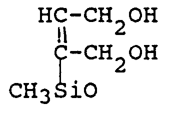
erhalten. Das IR-Spektrum zeigt bei 1620 cm⁻¹ die Bande für die C=C-Doppelbindung und das ¹H-NMR-Spektrum zeigt bei 6,1 ppm einen für eine polymere Substanz charakteristisch breiten Peak für das olefinische Wasserstoffatom in der Dihydroxybutenylgruppe

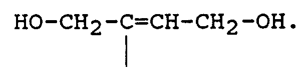

Bindungen folgender Art, -CH₂-O-Si≡, die von einer Reaktion der Hydroxylgruppen des 2-Butin-1,4-diols mit den Si-gebundenen Wasserstoffatomen in dem Methylhydrogensiloxaneinheiten enthaltenden Mischpolymerisat stammen würden, sind aus dem ²⁹Si-NMR-Spektrum nicht zu erkennen.

### Beispiel 4:

130 g des Organopolysiloxans, dessen Herstellung in Beispiel 3 beschrieben ist, werden in 50 g Toluol gelöst. Zu der Lösung werden 120 g Maleinsäureanhydrid zugegeben und die Reaktionsmischung wird 5 Stunden lang bei 80°C gerührt. Von der klaren Lösung werden dann die bei 100°C und 8 hPa (abs.) flüchtigen Bestandteile, wie Toluol und überschüssiges Maleinsäureanhydrid destillativ entfernt. Das zurück bleibende Öl wird in 1 Liter Methanol gelöst. Zu der Lösung werden in der Wärme 92 g Na₂S₂O₅ zugegeben, die Reaktionsmischung wird dann mit 1 n NaOH neutralisiert und anschließend 6 Stunden unter Rückfluß gekocht. Von dem Rohprodukt werden bei 100°C und 10 hPa (abs.) die flüchtigen Bestandteile destillativ entfernt. Es werden 350 g eines schwach gelblichen Feststoffs erhalten. Der so gewonnene Feststoff ist ein Organopolysiloxan aus Trimethylsiloxaneinheiten, Dimethylsiloxaneinheiten und Siloxaneinheiten der Formel 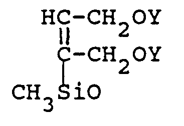
wobei Y ein Rest der Formel 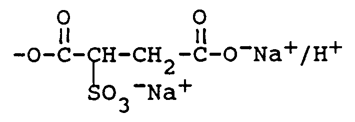
ist. Eine 1 %ige wäßrige Lösung dieses Organopolysiloxans hat eine Oberflächenspannung von 24,6 dym/cm.

### Beispiel 5:

Eine Mischung aus 88,6 g (1,03 Mol) 2-Butin-1,4-diol, 3 mg Platin in Form einer Lösung von Platintetrachlorid in 1-Octen und 20 g Toluol werden unter Stickstoffatmosphäre auf 115°C erwärmt. Zu der erwärmten Mischung werden dann 182 g (entsprechend 1,00 Grammatom Si-gebundenem Wasserstoff) eines Mischpolymerisats aus Methylhydrogensiloxan-, Dimethylsiloxan- und Trimethylsiloxaneinheiten, das 0,55 Gew.-% Si-gebundenen Wasserstoff enthält, zugetropft, wobei die Temperatur der Mischung auf 125°C ansteigt. Nach ca. 24 Stunden Reaktionszeit bei 125°C sind 98,9 % der Si-gebundenen Wasserstoffatome des Mischpolymerisats umgesetzt. Bei 100°C und 12 hPa (abs.) werden innerhalb einer Stunde die flüchtigen Bestandteile destillativ entfernt. Es wird ein klares Produkt mit einer Viskosität von 1,16·10⁵ mm²·s⁻¹ bei 25°C erhalten.

Das so erhaltene Organopolysiloxan enthält Trimethylsiloxaneinheiten, Dimethylsiloxaneinheiten und Siloxaneinheiten der Formel 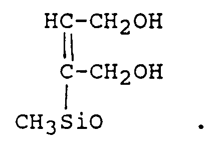
Bindungen folgender Art, -CH₂-O-Si≡, die von einer Reaktion der Hydroxylgruppe des 2-Butin-1,4-diols mit den Si-gebundenen Wasserstoffatomen in den Methylhydrogensiloxaneinheiten des Mischpolymerisats stammen würden, sind aus dem ²⁹Si-NMR-Spektrum nicht zu erkennen, liegen somit unterhalb der Nachweisgrenze.

### Vergleichsversuch (gemäß DD-A 239 596):

Die in Beispiel 5 beschriebene Arbeitsweise wird wiederholt mit der Abänderung, daß anstelle von 88,6 g (1,03 Mol) 2-Butin-1,4-diol 84,3 g (0,98 Mol) 2-Butin-1,4-diol eingesetzt werden. Es wird ein klares Produkt mit einer Viskosität von 2,38·10⁵ mm²·s⁻¹ erhalten. Die im Vergleich mit dem Beispiel 5 ca. doppelt so hohe Viskosität wird durch eine auftretende Nebenreaktion - Reaktion der Hydroxylgruppe des 2-Butin-1,4-diols mit den Si-gebundenen Wasserstoffatomen des Mischpolymerisats - verursacht. Von dieser Nebenreaktion stammende Bindungen folgender Art, -CH₂-O-Si≡, sind aus dem ²⁹Si-NMR-Spektrum bei -60 ppm zu entnehmen.

## Patentansprüche

1. Sulfosuccinatgruppen enthaltende Organopolysiloxane aus durchschnittlichen Einheiten der allgemeinen Formel 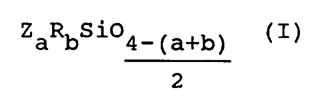 wobei R gleiche oder verschiedene, einwertige, gegebenenfalls halogenierte Kohlenwasserstoffreste mit 1 bis 18 Kohlenstoffatom(en) je Rest bedeutet,
Z ein Rest der Formel 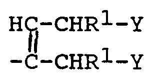 ist, wobei Y ein Rest der Formel 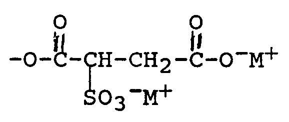 R¹ ein Wasserstoffatom oder einen Alkylrest mit 1 bis 4 Kohlenstoffatom(en) je Rest und
M⁺ ein Wasserstoffion und/oder ein Alkalimetallion bzw. ein Ammoniumion bedeutet,
a 0 oder 1, durchschnittlich 0,03 bis 1,0 und
b 0, 1, 2 oder 3, durchschnittlich 1,0 bis 2,5 bedeutet und die Summe a+b nicht größer als 3 ist,
mit der Maßgabe, daß mindestens zwei Reste Z je Molekül enthalten sind.

2. Sulfosuccinatgruppen enthaltende Organopoylsiloxane nach Anspruch 1, dadurch gekennzeichnet, daß es solche der allgemeinen Formel
Z_{c}R_{3-c}SiO(SiR₂O)ₙ(SiRZO)ₘSiR_{3-c}Z_{c} (II)
sind, wobei R und Z die gleiche Bedeutung wie im Anspruch 1 haben,
c 0 oder 1,
n 0 oder eine ganze Zahl von 1 bis 500 und
m 0 oder eine ganze Zahl von 1 bis 50 ist,
mit der Maßgabe, daß mindestens zwei Reste Z je Molekül enthalten sind.

3. Verfahren zur Herstellung von Sulfosuccinatgruppen enthaltenden Organopolysiloxanen nach Anspruch 1 oder 2, dadurch gekennzeichnet, daß zunächst
in einer 1. Stufe ein
Dihydroxyalkin (1) der allgemeinen Formel
HO-CHR¹-C≡C-CHR¹-OH ,
wobei R¹ ein Wasserstoffatom oder einen Alkylrest mit 1 bis 4 Kohlenstoffatom(en) je Rest bedeutet, mit Organopolysiloxan (2) mit mindestens einem Si-gebundenen Wasserstoffatom je Molekül in Mengen von 1,03 bis 2,0 Mol Dihydroxyalkin (1) je Grammatom Si-gebundener Wasserstoff im Organopolysiloxan (2) in Gegenwart von die Anlagerung von Si-gebundenen Wasserstoff an aliphatische Mehrfachbindung förderndem Katalysator (3) umgesetzt wird,
in einer 2. Stufe
die Dihydroxyalkenylgruppen des in der 1. Stufe erhaltenen Organopolysiloxans mit Maleinsäureanhydrid umgesetzt werden und dann
in einer 3. Stufe
die Maleinatgruppen des in der 2. Stufe erhaltenen Organopolysiloxans mit Alkalihydrogensulfit oder Ammoniumhydrogensulfit in Gegenwart von Wasser und einer basischen Verbindung umgesetzt werden.

4. Verfahren zur Herstellung von Dihydroxyalkenylgruppen enthaltenden Organopolysiloxanen durch Umsetzung von Dihydroxyalkin (1) mit Organopolysiloxan (2) mit mindestens einem Si-gebundenen Wasserstoffatom je Molekül in Mengen von 1,03 bis 2,0 Mol Dihydroxyalkin (1) je Grammatom Si-gebundener Wasserstoff im Organopolysiloxan (2) in Gegenwart von die Anlagerung von Si-gebundenen Wasserstoff an aliphatische Mehrfachbindung förderndem Katalysator (3).

5. Verfahren nach Anspruch 3 oder 4, dadurch gekennzeichnet, daß als Organopolysiloxan (2) mit mindestens einem Si-gebundenen Wasserstoffatom je Molekül solches der allgemeinen Formel 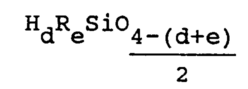 wobei R gleiche oder verschiedene, einwertige, gegebenenfalls halogenierte Kohlenwasserstoffreste mit 1 bis 18 Kohlenstoffatom(en) je Rest bedeutet,
d 0 oder 1, durchschnittlich 0,03 bis 1,0 und
e 0, 1, 2 oder 3, durchschnittlich 1,0 bis 2,5 ist
und die Summe d+e nicht größer als 3 ist,
verwendet wird.

6. Verfahren nach einem der Ansprüche 3 bis 5, dadurch gekennzeichnet, daß als Organopolysiloxan (2) solches der allgemeinen Formel
H_{f}R_{3-f}SiO(SiR₂O)ₒ(SiRHO)ₚSiR_{3-f}H_{f}
wobei R gleiche oder verschiedene, einwertige, gegebenenfalls halogenierte Kohlenwasserstoffreste mit 1 bis 18 Kohlenstoffatom(en) je Rest bedeutet,
f 0 oder 1,
o 0 oder eine ganze Zahl von 1 bis 500 und
p 0 oder eine ganze Zahl von 1 bis 50 ist,
mit der Maßgabe, daß mindestens zwei Wasserstoffatome je Molekül enthalten sind,
verwendet wird.

## Claims

1. Organopolysiloxane which contains sulphosuccinate groups and consists of average units of the general formula 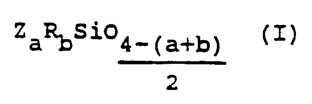 in which R denotes identical or different, monovalent, optionally halogenated hydrocarbon radicals having 1 to 18 carbon atom(s) per radical, Z is a radical of the formula 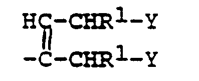 in which Y denotes a radical of the formula 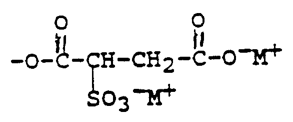 R¹ denotes a hydrogen atom or an alkyl radical having 1 to 4 carbon atom(s) per radical and M⁺ denotes a hydrogen ion and/or an alkali metal ion or an ammonium ion, a denotes 0 or 1, on average 0.03 to 1.0, b denotes 0, 1, 2 or 3, on average 1.0 to 2.5, and the sum of a+b is not greater than 3, with the proviso that the compound contains at least two radicals Z per molecule.

2. Organopolysiloxane containing sulphosuccinate groups according to Claim 1, characterized in that it is one of the general formula
Z_{c}R_{3-c}SiO(SiR₂O)ₙ(SiRZO)ₘSiR_{3-c}Z_{c} (II)
in which R and Z have the same meaning as in Claim 1, c is 0 or 1, n is 0 or an integer from 1 to 500 and m is 0 or an integer from 1 to 50, with the proviso that the compound contains at least two radicals Z per molecule.

3. Process for the preparation of an organopolysiloxane containing sulphosuccinate groups according to Claim 1 or 2, characterized in that, in a first stage, a dihydroxyalkyne (1) of the general formula
HO-CHR¹-C≡C-CHR¹-OH,
in which R¹ denotes a hydrogen atom or an alkyl radical having 1 to 4 carbon atom(s) per radical, is first reacted with an organopolysiloxane (2) having at least one Si-bonded hydrogen atom per molecule in amounts of 1.03 to 2.0 mol of dihydroxyalkyne (1) per gram-atom of Si-bonded hydrogen in the organopolysiloxane (2) in the presence of a catalyst (3) which promotes the addition of Si-bonded hydrogen onto an aliphatic multiple bond, in a second stage, the dihydroxyalkenyl groups of the organopolysiloxane obtained in the first stage are reacted with maleic anhydride and then in a third stage, the maleate groups of the organopolysiloxane obtained in the second stage are reacted with an alkali metal bisulphite or ammonium bisulphite in the presence of water and a basic compound.

4. Process for the preparation of an organopolysiloxane containing dihydroxyalkenyl groups by reaction of a dihydroxyalkyne (1) with an organopolysiloxane (2) having at least one Si-bonded hydrogen atom per molecule in amounts of 1.03 to 2.0 mol of dihydroxyalkyne (1) per gram-atom of Si-bonded hydrogen in the organopolysiloxane (2) in the presence of a catalyst (3) which promotes the addition of Si-bonded hydrogen onto an aliphatic multiple bond.

5. Process according to Claim 3 or 4, characterized in that the organopolysiloxane (2) used, having at least one Si-bonded hydrogen atom per molecule, is one of the general formula 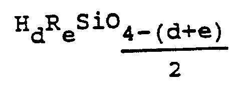 in which R denotes identical or different monovalent optionally halogenated hydrocarbon radicals having 1 to 18 carbon atom(s) per radical, d is 0 or 1, on average 0.03 to 1.0, e is 0, 1, 2 or 3, on average 1.0 to 2.5, and the sum of d+e is not greater than 3.

6. Process according to any of Claims 3 to 5, characterized in that the organopolysiloxane (2) used is one of the general formula
H_{f}R_{3-f}SiO(SiR₂O)ₒ(SiRHO)ₚSiR_{3-f}H_{f}
in which R denotes identical or different monovalent optionally halogenated hydrocarbon radicals having 1 to 18 carbon atom(s) per radical, f is 0 or 1, o is 0 or an integer from 1 to 500 and p is 0 or an integer from 1 to 50, with the proviso that the compound contains at least two hydrogen atoms per molecule.

## Revendications

1. Polyorganosiloxanes contenant des groupes sulfosuccinate, constitués de motifs moyens de formule générale
ZₐR_{b}SiO_{4-(a+b)/2} (I)
dans laquelle R représente des radicaux hydrocarbonés monovalents, éventuellement halogénés, identiques ou différents, ayant chacun 1 à 18 atomes de carbone,
Z est un radical de formule 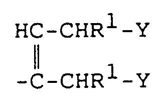 où Y est un résidu de formule 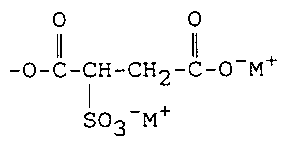 R¹ est un atome d'hydrogène ou un radical alkyle ayant de 1 à 4 atomes de carbone par radical, et
M⁺ est un ion hydrogène et/ou un ion d'un métal alcalin ou un ion ammonium,
a vaut 0 ou 1 et en moyenne de 0,03 à 1,0, et
b vaut 0, 1, 2 ou 3, et en moyenne de 1,0 à 2,5,
et la somme a+b n'est pas supérieure à 3,
du moment que chaque molécule contient au moins deux radicaux Z.

2. Polyorganosiloxanes contenant des groupes sulfosuccinate selon la revendication 1, caractérisés en ce qu'il s'agit de composés de ce type de formule générale
Z_{c}R_{3-c}SiO(SiR₂O)ₙ(SiRZO)ₘSiR_{3-c}Z_{c} (II)
où R et Z ont les mêmes significations que dans la revendication 1,
c vaut 0 ou 1,
n vaut 0 ou est un nombre entier de 1 à 500, et
m vaut 0 ou est un nombre entier de 1 à 50,
du moment que chaque molécule contient au moins deux radicaux Z.

3. Procédé selon la revendication 1 ou 2, caractérisé pour préparer des polyorganosiloxanes contenant des groupes sulfosuccinate, caractérisé en ce qu'on fait réagir d'abord
dans une 1ère étape, un dihydroxyalcyne (1) de formule générale
HO-CHR¹-C≡C-CHR¹-OH
où R¹ est un atome d'hydrogène ou un radical alkyle ayant de 1 à 4 atomes de carbone par radical, avec un polyorganosiloxane (2) ayant au moins un atome d'hydrogène lié à Si par molécule, en une quantité de 1,03 à 2,0 mol de dihydroxyalcyne (1) par atome-gramme d'hydrogène lié à Si dans le polyorganosiloxane (2), en présence d'un catalyseur (3) favorisant la fixation, sur la liaison multiple aliphatique, de l'hydrogène lié à Si,
on fait réagir dans une 2ème étape les groupes dihydroxyalcényle du polyorganosiloxane obtenu dans la 1ère étape, avec de l'anhydride maléique, puis
on fait réagir dans une 3ème étape les groupes maléate du polyorganosiloxane obtenu dans la 2ème étape avec l'hydrogénosulfite d'un métal alcalin ou de l'hydrogénosulfite d'ammonium, en présence d'eau et d'un composé basique.

4. Procédé pour préparer des polyorganosiloxanes contenant des groupes dihydroxyalcényle, par réaction d'un dihydroxyalcyne (1) avec un polyorganosiloxane (2) comportant au moins un atome d'hydrogène lié à Si par molécule, en des quantités de 1,03 à 2,0 mol de dihydroxyalcyne (1) par atome-gramme d'hydrogène lié à Si dans le polyorganosiloxane (2), en présence d'un catalyseur (3) favorisant la fixation, sur la liaison multiple aliphatique, d'hydrogène lié à Si.

5. Procédé selon la revendication 3 ou 4, caractérisé en ce qu'on utilise comme polyorganosiloxane (2) ayant par molécule au moins un atome d'hydrogène lié à Si un tel composé de formule générale
H_{d}RₑSiO_{4-(d+e)/2}
dans laquelle R représente des radicaux hydrocarbonés monovalents, éventuellement halogénés, identiques ou différents, ayant de 1 à 18 atomes de carbone par molécule,
d vaut 0 ou 1, en moyenne de 0,03 à 1,0, et
e vaut 0, 1, 2 ou 3, en moyenne de 1,0 à 2,5,
et la somme d+e n'est pas supérieure à 3.

6. Procédé selon l'une des revendications 3 à 5, caractérisé en ce qu'on utilise comme polyorganosiloxane (2) un composé de ce type de formule générale
H_{f}R_{3-f}SiO(SiR₂O)ₒ(SiRHO)-pSiR_{3-f}H_{f}
où les radicaux R sont des radicaux hydrocarbonés monovalents, éventuellement halogénés, identiques ou différents, ayant de 1 à 18 atomes de carbone par radical,
f vaut 0 ou 1,
o vaut 0 ou est un nombre entier de 1 à 500, et
p vaut 0 ou est un nombre entier de 1 à 50,
du moment que chaque molécule contient au moins deux atomes d'hydrogène.
